# EUROPÄISCHE PATENTANMELDUNG

(11) **EP 3 023 818 A1**
(43) Veröffentlichungstag der Anmeldung: **25.05.2016**
(21) Anmeldenummer: 14193803.5
(22) Anmeldetag: 19.11.2014
(51) Int. Cl.: G02B 5/02, F21V 8/00

(54) **Reflexionsfolie für Leuchten und Lichtkästen**

(71) Anmelder: ISOVOLTAIC AG, 8403 Lebring (AT)
(72) Erfinder: Feichtner, Markus, 8842 Frojach-Katsch (AT); Gradwohl, Jörg, 8010 Kainbach bei Graz (AT); Krumlacher, Werner, 9400 Wolfsberg (AT); Malli, Bernd, 8442 Kitzeck im Sausal (AT); Muckenhuber, Harald, 8403 Lebring (AT); Plessing, Albert, 8010 Graz (AT)
(74) Vertreter: Schwarz & Partner

(57) **Zusammenfassung**

Die Erfindung betrifft eine Verbundfolie, verwendbar zur Reflexion von Licht, mit einer ersten, lichtreflektierenden Folie (12) als Substrat, wobei auf zumindest einer Seite der Folie eine lichtreflektierende Beschichtung (11) aufgebracht ist.

## Beschreibung

Die vorliegende Erfindung betrifft eine Verbundfolie, die als Reflexionsfolie in Leuchtkörpern (z.B. Lampen, Flächenleuchten, Lichtkästen) die Lichtausbeute in Relation zur eingesetzten elektrischen Energie erhöht und die Gleichmäßigkeit des Lichteindrucks, besonders bei punktförmigen Lichtquellen wie LEDs, verbessert.

Herkömmliche Leuchtkörper sind in Ihrem Inneren entweder gar nicht oder nur mit einer schwach reflektierenden Oberfläche ausgestattet.

Es hat sich gezeigt, dass der Einsatz von hochreflektierenden Reflexionsfolien die Lichtausbeute signifikant erhöhen kann, indem Licht, welches ansonsten im Leuchteninneren absorbiert würde, wieder in Richtung Leuchtenausgang reflektiert wird. Zusätzlich ist eine hohe diffuse Reflexion vorteilhaft, um einen gleichmäßigen und flächigen Lichteindruck bei punkt- oder linienförmigen Lichtquellen (z.B. LEDs) zu erzielen (DE 699 08 968; DE 10 2009 010 831; US 6,943,855).

Historisch wurden diese Folien bisher vor allem für Backlight Displays (Beleuchtung von der Rückseite) von Monitoren verwendet. Die aufkommende LED-Technologie kennt sowohl Backlight als auch Edgelight (Beleuchtung von der Kante). Für beide Technologien können Reflexionsfolien die Lichtausbeute erhöhen und die Gleichmäßigkeit des Lichteindrucks verbessern.

Da es sich um eine elektrische Anwendung handelt, sind Isolations- und Temperaturbeständigkeitseigenschaften von Bedeutung.

In der Patentliteratur finden sich zahlreiche Schriften, die unterschiedliche Konzepte für Reflexionsfolien beschreiben. Zumeist werden speziell gefüllte Polymere (US 6,943,855) oder Folien mit spezieller Oberflächenstruktur (DE 10 2009 010 831) gezeigt.

Diese herkömmlich hergestellten Reflexionsfolien weisen jedoch mehrere Nachteile auf:
Sie haben eine vergleichsweise geringe UV-, Licht- und Temperaturstabilität. Daher kommt es zu einer Verfärbung (meist Vergilbung) der Reflexionsfolie, speziell bei lichtstarken Leuchtkörpern. Dadurch wird erstens die Reflexion und in weiterer Folge die Lichtausbeute reduziert und das Licht ungleichmäßig reflektiert. Zweitens absorbiert eine dunkle Verfärbung mehr Licht, was zu einer beschleunigten, weiteren Verfärbung führt.

Manche Konzepte (z.B. US 2013/158143) für Reflexionsfolien verwenden geschäumte Polymere, um die geforderte diffuse Reflexion zu erreichen. Dies bewirkt allerdings, dass die Beständigkeit gegen elektrischen Durchschlag reduziert wird.

Reflexionsfolien deren Außenschicht aus thermoplastischen Kunststoffen besteht, zeigen häufig auch einen ungleichmäßigen Reflexionsgrad über den sichtbaren Wellenlängenbereich. Dadurch kann die Lichtfarbe der LEDs ungünstig verändert werden.

Die gegenständliche Erfindung stellt sich daher die Aufgabe, eine Verbundfolie zu schaffen, welche diese Nachteile nicht aufweist, sodass eine Verbundfolie mit hoher Reflektivität, hoher Temperatur-, UV- und Lichtstabilität, hoher Spannungsfestigkeit und hoher Formstabilität erhalten wird.

Die erfindungsgemäße Verbundfolie der eingangs beschriebenen Art zur Reflexion von Licht, besitzt eine erste, lichtreflektierende Folie als Substrat, wobei auf zumindest einer Seite der Folie eine lichtreflektierende Beschichtung aufgebracht ist.

Eine bevorzugte Ausführungsform der erfindungsgemäßen Verbundfolie ist dadurch gekennzeichnet, dass die lichtreflektierende Beschichtung aus einem chemisch vernetzenden Fluorpolymer mit reaktiven OH-Gruppen und einem Härter mit reaktiven Isocyanatgruppen hergestellt und mit einem Weißpigment versetzt ist.

Das Weißpigment ist bevorzugt Titandioxid.

Die lichtreflektierende Folie hat vorteilhafterweise eine Dicke im Bereich von 20 bis 60 µm.

Das Substrat kann aus einem thermoplastischen Kunststoff, insbesondere PET (Polyethylenterephthalet) oder PBT (Polybutylenterephthalat), bestehen.

Eine weitere Ausführungsform der erfindungsgemäßen Verbundfolie ist dadurch gekennzeichnet, dass die erste, lichtreflektierende Folie eine Dicke im Bereich von 100 µm bis 1.000 µm aufweist.

Auf beiden Seiten der lichtreflektierenden Folie kann eine lichtreflektierende Beschichtung aufgebracht sein.

Eine weitere bevorzugte Ausführungsform der erfindungsgemäßen Verbundfolie ist dadurch gekennzeichnet, dass das Substrat aus zwei Folien besteht, welche mittels eines Klebers miteinander verbunden sind.

Der Kleber kann aus einem Polyol und einem Härter mit Isocyanatgruppen hergestellt sein.

Der Kleber kann ein Weißpigment, insbesondere Titandioxid, enthalten.

Der Kleber kann ein PSA-Kleber sein.

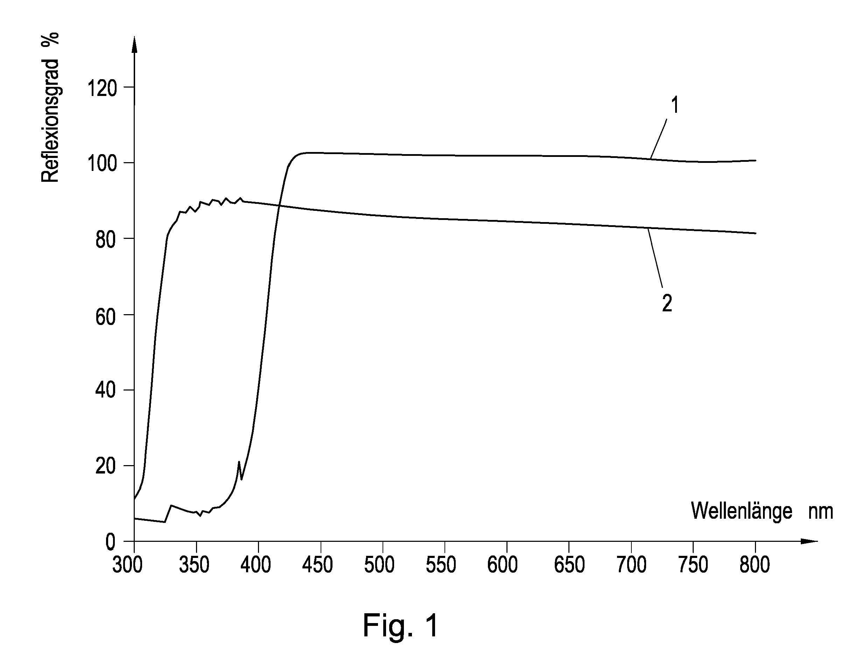

Fig. 1 zeigt den Vergleich des Reflexionsgrades eines herkömmlichen, weißen thermoplastischen Kunststoffes mit einer erfindungsgemäßen Beschichtung. Die Reflexion >100% ergibt sich aus dem Vergleich zum Bariumsulfat-Standard (=100%). In der Fig. 1 bezeichnet die Bezugsziffer 1 eine Beschichtung auf "PET hochweiß" und die Bezugsziffer 2 bedeutet "PET Standard Weiß".

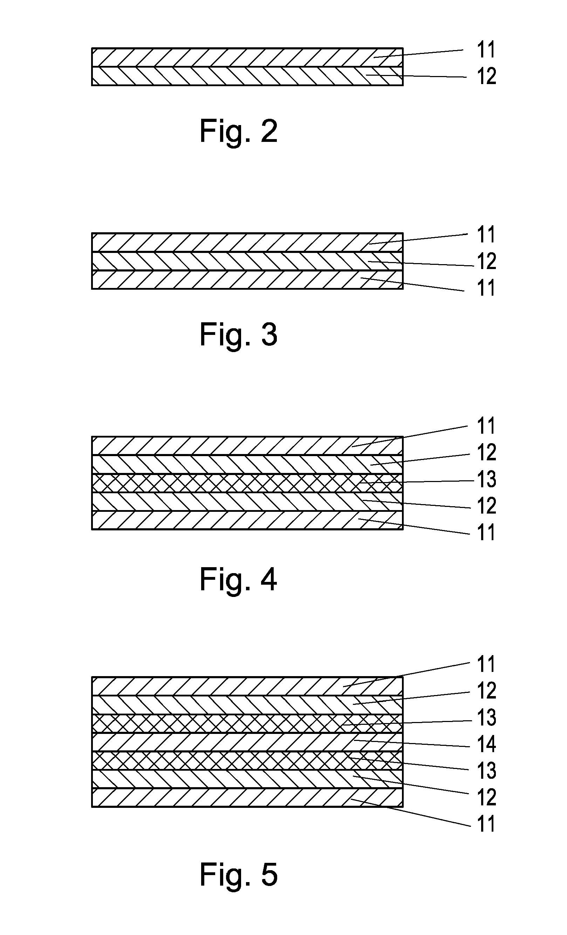

In der gegenständlichen Erfindung wird somit eine hoch reflektierende Beschichtung mindestens einseitig auf ein bereits sehr gut reflektierendes, hochweißes Substrat aufgebracht. In dieser Kombination wird eine Reflexion von >98% bei einer Wellenlänge von 550 nm (im Vergleich zum Standard Bariumsulfat) erreicht. Ein schematischer Aufbau einer erfindungsgemäßen Verbundfolie findet sich in Fig. 2. In Fig. 2 bezeichnet die Bezugsziffer 11 eine Beschichtung und die Bezugsziffer 12 bezeichnet eine hochweiße Substratfolie. Die Beschichtung besteht aus einem chemisch vernetzenden Fluorpolymer mit reaktiven OH-Gruppen, einem Härter mit reaktiven Isocyanatgruppen und ist mit einem Weißpigment, z.B. Titandioxid, gefüllt. Die Beschichtung wird mit einem Lösungsmittel (z.B. Methylethylketon - MEK) derart verdünnt, dass sie in einem Rolle-zu-Rolle Prozess auf das Substrat beschichtet werden kann. In einem beheizten Trockenkanal wird bei erhöhter Temperatur das Lösungsmittel abgedampft und die chemische Härtungsreaktion gestartet.

Die bevorzugte Dicke der Beschichtung liegt in einem Bereich von 20 bis 60 µm.

Das Substrat ist vorzugsweise eine thermoplastische Kunststofffolie, z.B. aus PET oder PBT, mit einer Dicke von 100 µm oder mehr, welche bereits eine Reflexion von >93 % aufweist.

Weitere bevorzugte Ausführungsformen sind neben dem Aufbau Beschichtung-Substrat (B-S) z.B. die Varianten B-S-B, bzw. B-S-Kleber-S-B.

Weitere, bevorzugte erfindungsgemäße Ausführungsformen sind in den Fig. 3 und Fig. 4 schematisch dargestellt.

In Fig. 3 und Fig. 4 bezeichnet die Bezugsziffer 11 eine Beschichtung, die Bezugsziffer 12 bezeichnet eine hochweiße Substratfolie, und die Bezugsziffer 13 bezeichnet einen Kleber. Der chemisch härtende Kleber besteht aus einem Polyol, einem Härter mit Isocyanatgruppen, ist mit einem Weißpigment, z.B. Titandioxid, eingefärbt sowie mit einem Lösungsmittel, z.B. MEK, derart verdünnt, dass er in einem Rolle-zu-Rolle Prozess auf das Substrat beschichtet werden kann. In einem beheizten Trockenkanal wird bei erhöhter Temperatur das Lösungsmittel abgedampft und die chemische Härtungsreaktion gestartet. Das Weißpigment im Klebesystem kann optional auch weggelassen werden.

Eine weitere, bevorzugte Ausführungsform zur weiteren Erhöhung der Reflexion, der Steifigkeit und der elektrischen Durchschlagsfestigkeit ist folgender Aufbau: Beschichtung-Substrat-Kleber-PET-Kleber-Substrat-Beschichtung, wie beispielsweise in Fig. 5 schematisch dargestellt.

In der Fig. 5 bezeichnen:
die Bezugsziffer 11 eine Beschichtung,
die Bezugsziffer 12 eine hochweiße Substratfolie,
die Bezugsziffer 13 einen Kleber, und
die Bezugsziffer 14 eine PET-Folie.

In einer weiteren bevorzugten Ausführungsform kann die Reflexionsfolie mit einem kommerziell erhältlichen PSA-Kleber (PSA Pressure Sensitive Adhesive) beschichtet sein. Dies macht die Applikation im Leuchtkörper noch einfacher, da die Reflexionsfolie aufgeklebt werden kann.

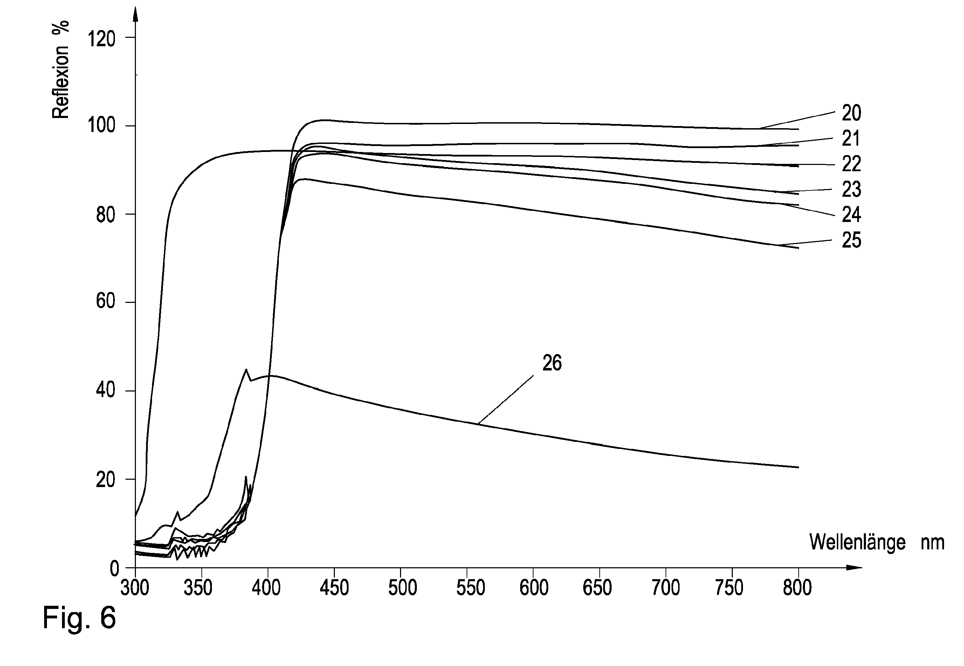

In Fig. 6 sind Reflexionswerte von Standard- und hochweißer PET-Folie und verschiedenen Beschichtungsdicken dargestellt. Nur in der Kombination von hochweißer PET Folie und ausreichender Beschichtungsdicke wird die hohe Reflexion erreicht, welche über den Wellenlängenbereich 400-800 nm möglichst gleichmäßig sein soll.

In der Fig. 6 bezeichnen:
Die Bezugsziffer 20 eine 50 µm Beschichtung auf PET Standard hochweiß, die Kurve ist deckungsgleich mit einer 20 µm Beschichtung auf PET hochweiß,
die Bezugsziffer 21 eine 10 µm Beschichtung auf PET Standard hochweiß,
die Bezugsziffer 22 PET hochweiß,
die Bezugsziffer 23 eine 30 µ Beschichtung auf PET Standard weiß,
die Bezugsziffer 24 eine 20 µ Beschichtung auf PET Standard weiß,
die Bezugsziffer 25 eine 10 µ Beschichtung auf PET Standard weiß,
die Bezugsziffer 26 PET Standard weiß.

PET hochweiß ist dabei als eine weiße PET Folie mit einer Reflexion >93% definiert.

Um die besondere praktische Relevanz der hohen Reflexion zu belegen, wurde das Innere eines LED-Lichtkastens mit den Abmessungen LxBxH 200x50x20 cm mit unterschiedlichen Reflexionsmedien ausgekleidet. Verwendet wurden ein weißer Lack mit 85% Reflexion, eine Reflexionsfolie mit 95% Reflexion sowie die erfindungsgemäße Folie mit 98% Reflexion. Die Lichtstärke wurde mit einem Luxmeter in 25cm und in 50 cm Entfernung gemessen. Ergebnisse sind in der Tabelle 1 beschrieben.

**Tabelle 1**

| **Reflexionsmedium** | **Abstand** | **Relative Lichtstärke** |
|---|---|---|
| Lack 85% Reflexion | 25 cm | 100% |
| Folie 95% Reflexion | 25 cm | 151% |
| Erfindungsgemäße Folie 98% Reflexion | 25 cm | 165% |
| Lack 85% Reflexion | 50 cm | 100% |
| Folie 95% Reflexion | 50 cm | 155% |
| Erfindungsgemäße Folie 98% Reflexion | 50 cm | 165% |

Es hat sich also gezeigt, dass die Lichtausbeute eines LED-Lichtkastens durch Verwendung der erfindungsgemäßen Folie erheblich gesteigert werden konnte.

Es hat sich weiters gezeigt, dass die erfindungsgemäße Verbundfolie aufgrund Ihrer Beschichtung besonders beständig gegen Temperatur, UV- und Lichteinstrahlung ist, wodurch Verfärbung verhindert wird.

Im "Blaulichttest" (1000 h; 120°C; 440 nm Lichtwellenlänge; Strahlungsstärke 450 mW/cm²; Bestrahlungsdurchmesser 15 mm) kommt es zu keiner Verfärbung der Beschichtung. Thermoplaste, wie beispielsweise Polyamid oder PET beginnen sich hingegen zu verfärben.

Weiters ist die erfindungsgemäße Folie in allen möglichen Aufbauten porenfrei und zeigt eine sehr hohe elektrische Spannungsfestigkeit, wodurch in Relation zu anderen Reflexionsfolien dünnere Schichten bei vergleichbarer elektrischer Isolation verwendet können.

In der Tabelle 2 ist ein Vergleich der Durchschlagsspannungen absolut und relativ zur Dicke (= elektrische Feldstärke) beschrieben.

**Tabelle 2**

| | **Durchschlagsspannung** | |
|---|---|---|
| | **kV** | **kV/mm** |
| Erfindungsgemäße Folie, Dicke 0,6 mm | 34 | 56,6 |
| Geschäumte PET-Folie, Dicke 0,55 mm | 27,7 | 50,4 |
| Geschäumte PET-Folie, Dicke 0,94 mm | 32,3 | 34,4 |

Um die häufig dreidimensionalen Konturen von Leuchtkörpern besser ausformen zu können, kann die erfindungsgemäße Folie in einem Tiefziehverfahren dreidimensional verformt werden.

Für aufwändigere Geometrien kann der Folienverbund ohne Beschichtung verformt werden und die Beschichtung nachträglich mittels Tauch- oder Sprühverfahren aufgebracht werden.

Nachfolgend wird die Erfindung anhand bevorzugter Ausführungsformen noch näher beschrieben:

### Beispiel 1

### Herstellung eines Folien-/Beschichtungsverbundes

Für die Substratschicht wurde eine Folie aus einem Polymer, ausgewählt aus der Gruppe PET (Polyethylenterephthalat) oder PBT (Polybutylenterephthalat) verwendet. Die Substratfolie weist eine Reflexion von über 93% bei 550 nm auf.

Die Herstellung der Beschichtungslösung erfolgte in einem Intensivrührwerk, in dem das TiO₂-Pigment durch sehr hohe Scherkräfte homogen in die Fluorpolymerbasislösung eingemischt wurde. Die optimale Viskosität für einen Auftrag über eine Beschichtungswalze wurde mit MEK als Lösemittel eingestellt.

Die Beschichtung erfolgte in einem kontinuierlichen Prozess über eine Beschichtungswalze, die Beschichtungslösung wurde inline mit dem Isocyanathärter vermischt. Das vorhandene Lösungsmittel wurde in einem Trockenkanal bei 120°C abgedampft und die Härtungsreaktion gestartet.

Zur Mattierung der Oberfläche, wodurch der diffuse Reflexionsanteil erhöht wird, wurde beim Aufwickeln des Folien-/ Beschichtungsverbundes eine Polypropylentrennfolie mit definierter Oberflächenrauigkeit eingesetzt.

### Beispiel 2

### Herstellung eines Beschichtungs/Folien/Kleber/Folien/Beschichtungsverbundes

Der Folien-/Beschichtungsverbund aus Beispiel 1) wurde doubliert, indem die PET / bzw. PBT-Seite des Verbundes mittels PU-Klebesystem beschichtet wurde und eine zweite Rolle des Folien-/Beschichtungsverbundes mit der PET-Seite dazu verklebt wurde.

Das PU-Klebesystem wurde über eine Auftragswalze mit einem Harzauftrag zwischen 1g/m² und 15g/m² auf die Folie aus einem der genannten Polymere aufgetragen. Danach wurde das Lösungsmittel des PU-Klebesystems bei 120°C verdampft und die beschichtete Folie zwischen zwei Presswalzen verklebt. Weitere Schichten oder Zwischenschichten können analog zu diesen Schichten verklebt werden.

### Beispiel 3

### Herstellung einer selbstklebenden Reflexionsfolie

Eine Reflexionsfolie aus Beispiel 1 oder Beispiel 2 wurde mit einem Pressure Sensitive Adhesive (PSA) kombiniert. Das PSA konnte sowohl direkt auf einer Extrusionsanlage aufextrudiert, oder als Transferklebefilm aufgebracht werden.

Die PSA-Schicht wurde mit einer Trennfolie abgedeckt, damit diese bei der Endanwendung abgezogen und die Reflexionsfolie mit der selbstklebenden PSA Schicht direkt auf den Untergrund aufgeklebt werden kann.

## Patentansprüche

1. Verbundfolie, verwendbar zur Reflexion von Licht, mit einer ersten, lichtreflektierenden Folie als Substrat, wobei auf zumindest einer Seite der Folie eine lichtreflektierende Beschichtung aufgebracht ist.

2. Verbundfolie nach Anspruch 1, **dadurch gekennzeichnet, dass** die lichtreflektierende Beschichtung aus einem chemisch vernetzenden Fluorpolymer mit reaktiven OH-Gruppen und einem Härter mit reaktiven Isocyanatgruppen hergestellt und mit einem Weißpigment versetzt ist.

3. Verbundfolie nach Anspruch 2, **dadurch gekennzeichnet, dass** das Weißpigment Titandioxid ist.

4. Verbundfolie nach einem der Ansprüche 1 bis 3, **dadurch gekennzeichnet, dass** die lichtreflektierende Beschichtung eine Dicke im Bereich von 20 bis 60 µm aufweist.

5. Verbundfolie nach einem der Ansprüche 1 bis 4, **dadurch gekennzeichnet, dass** das Substrat aus einem thermoplastischen Kunststoff, insbesondere Polyethylenterephthalat oder Polybutylenterephthalat, besteht.

6. Verbundfolie nach einem der Ansprüche 1 bis 5, **dadurch gekennzeichnet, dass** die erste, lichtreflektierende Folie eine Dicke im Bereich von 100 µm bis 1.000 µm aufweist.

7. Verbundfolie nach einem der Ansprüche 1 bis 6, **dadurch gekennzeichnet, dass** auf beiden Seiten der lichtreflektierenden Folie eine lichtreflektierende Beschichtung aufgebracht ist.

8. Verbundfolie nach einem der Ansprüche 1 bis 7, **dadurch gekennzeichnet, dass** das Substrat aus zwei Folien besteht, welche mittels eines Klebers miteinander verbunden sind.

9. Verbundfolie nach Anspruch 8, **dadurch gekennzeichnet, dass** der Kleber aus einem Polyol und einem Härter mit Isocyanatgruppen hergestellt ist.

10. Verbundfolie nach Anspruch 9, **dadurch gekennzeichnet, dass** der Kleber ein Weißpigment, insbesondere Titandioxid, enthält.

11. Verbundfolie nach einem der Ansprüche 8 oder 10, **dadurch gekennzeichnet, dass** der Kleber ein PSA-Kleber ist.
